# EUROPEAN PATENT APPLICATION

(11) **EP 4 756 482 A1**
(43) Date of publication of application: **10.06.2026**
(21) Application number: 24848615.1
(22) Date of filing: 23.04.2024
(51) Int. Cl.: G01S 7/03, A01B 69/00, G01S 13/931

(54) **WORK VEHICLE**

(30) Priority: 02.08.2023 JP 2023126590
(71) Applicant: Kubota Corporation, Osaka 556-8601 (JP)
(72) Inventor: TAKAYA Kenta, Sakai-shi, Osaka 590-0908 (JP); FUJIMOTO Kazutaka, Sakai-shi, Osaka 590-0908 (JP); TAKEOKA Susumu, Sakai-shi, Osaka 590-0908 (JP); UEDA Shuya, Sakai-shi, Osaka 590-0908 (JP); OMURA Tomoya, Sakai-shi, Osaka 590-0908 (JP)
(74) Representative: Müller-Boré & Partner Patentanwälte PartG mbB
(86) International application number: PCT/JP2024/015913
(87) International publication number: WO 2025/027954

(57) **Abstract**

There is provided a working vehicle that can suitably perform detection of a detection target, using radio waves.

The working vehicle includes: a radar main body 110 that emits radio waves to be used for detection; an attachment stay 150 (160) to which the radar main body 110 is fixed and which is attached to a vehicle body; and a radar cover 130 that is fixed to the attachment stay 150 (160), covers an emission surface 111 of the radar main body 110 that emits the radio waves, and is formed to be capable of transmitting the radio waves.

## Description

### TECHNICAL FIELD

The present invention relates to a technique for working vehicles.

### BACKGROUND ART

Techniques for working vehicles capable of detecting a detection target around the vehicle body have been known. For example, Patent Literature 1 discloses such a configuration.

Patent Literature 1 discloses a working vehicle including a ridge identifying unit that detects and identifies an obstacle such as a ridge in front of the vehicle body. The ridge identifying unit includes a sensor such as a distance measuring sensor.

A distance measuring sensor such as the one mentioned above detects an obstacle by transmitting radio waves such as millimeter waves, and receiving the radio waves reflected by the obstacle to be detected. Here, in a case where foreign matter adheres to the portion of the distance measuring sensor that transmits and receives radio waves, it might be difficult to detect a detection target.

### CITATION LIST

### PATENT LITERATURE

Patent Literature 1: JP 2023-078903 A

### SUMMARY OF INVENTION

### TECHNICAL PROBLEM

One aspect of the present disclosure has been made in view of the above circumstances, and an objective of the aspect is to provide a working vehicle capable of suitably detecting a detection target, using radio waves.

### SOLUTION TO PROBLEM

The problem to be solved by one aspect of the present disclosure is as described above, and the means to solve the problem is described next.

A working vehicle according to one aspect of the present disclosure is a working vehicle that includes a detection unit capable of detecting a detection target around the vehicle body. The detection unit includes: a radar that emits a radio wave to be used for detection; an attachment stay to which the radar is fixed, and which is attached to the vehicle body; and a radar cover that is fixed to the attachment stay, covers an emission surface of the radar, and is capable of transmitting the radio wave, the emission surface emitting the radio wave.

According to one aspect of the present disclosure, it is possible to suitably detect a detection target, using radio waves.

The working vehicle according to one aspect of the present disclosure further includes a sealing member that closes a gap between the radar cover and the attachment stay.

According to one aspect of the present disclosure, the sealing member is provided, and thus, dust and water can be prevented from entering from the gap between the radar cover and the attachment stay.

In the radar cover according to one aspect of the present disclosure, a portion through which the radio wave passes is formed to have a uniform thickness.

According to one aspect of the present disclosure, accuracy of detection using radio waves can be further increased.

The working vehicle according to one aspect of the present disclosure further includes an attenuator capable of attenuating a sidelobe wave generated on the outer side of a detection range, the sidelobe wave being of the radio wave emitted by the radar.

According to one aspect of the present disclosure, accuracy of detection using radio waves can be further increased.

The attenuator according to one aspect of the present disclosure includes: a main body portion having a detection range surface that is a surface extending along the detection range of the radar; and a radio wave absorber provided on the detection range surface.

According to one aspect of the present disclosure, it is possible to prevent detection of a structure or the like outside the detection range, and further increase accuracy of detection.

The working vehicle according to one aspect of the present disclosure further includes an insertion portion that is inserted into holes formed in the main body portion and the radio wave absorber.

According to one aspect of the present disclosure, positioning of the radio wave absorber with respect to the main body portion can be performed with the use of the insertion portion.

The detection unit according to one aspect of the present disclosure includes: a front detection unit provided on the front side of the vehicle body; and a back detection unit provided on the back side of the vehicle body. In the front detection unit and the back detection unit, at least one of the radar or the radar cover has the same configuration.

According to one aspect of the present disclosure, the front and back detection units can use each other's radar or radar cover, and thus, cost reduction can be achieved.

The detection unit according to one aspect of the present disclosure includes: a left detection unit provided on the left side of the vehicle body; and a right detection unit provided on the right side of the vehicle body. In the left detection unit and the right detection unit, at least one of the radar or the radar cover has the same configuration.

According to one aspect of the present disclosure, the left and right detection units can use each other's radar or radar cover, and thus, cost reduction can be achieved.

### ADVANTAGEOUS EFFECTS OF INVENTION

According to one aspect of the present disclosure, it is possible to suitably detect a detection target, using radio waves.

### BRIEF DESCRIPTION OF DRAWINGS

Fig. 1 is a side view showing the overall configuration of a tractor according to one aspect of the present disclosure.
Fig. 2 is a plan view showing the overall configuration of the tractor.
Fig. 3 is a front view of the tractor.
Fig. 4 is a perspective view showing a front portion of a hood, a front radar unit, a front support member, and a design cover.
Fig. 5 is an exploded perspective view showing a machine body frame, the front radar unit, the front support member, and the design cover.
Fig. 6 is an exploded perspective view of the front radar unit.
Fig. 7 is a front view of the front support member.
Fig. 8 is a plan view showing a state in which the design cover is used as a mark indicating a ridge width or the like.
Fig. 9 is a perspective rear view showing a rear portion of the roof of the cabin, a back radar unit, and a back support member.
Fig. 10 is an exploded perspective rear view showing the back radar unit and the back support member.
Fig. 11 is a left cross-sectional view showing the rear portion of the roof of the cabin, the back radar unit, and a back support member.
Fig. 12 is a perspective view showing a left-side portion of the cabin and a left radar unit.
Fig. 13 is a perspective view showing front pillars, the left radar unit, and a right radar unit.
Fig. 14 is a front cross-sectional view showing a front pillar and the left radar unit.
Fig. 15 is a plan view showing the detection ranges of the respective radar units.

### DESCRIPTION OF EMBODIMENT

In the following description, directions indicated by an arrow U, an arrow D, an arrow F, an arrow B, an arrow L, and an arrow R in the drawings are defined as an upward direction, a downward direction, a frontward direction, a backward direction, a leftward direction, and a rightward direction, respectively.

First, the overall configuration of a tractor 1 according to an aspect of the present disclosure is described.

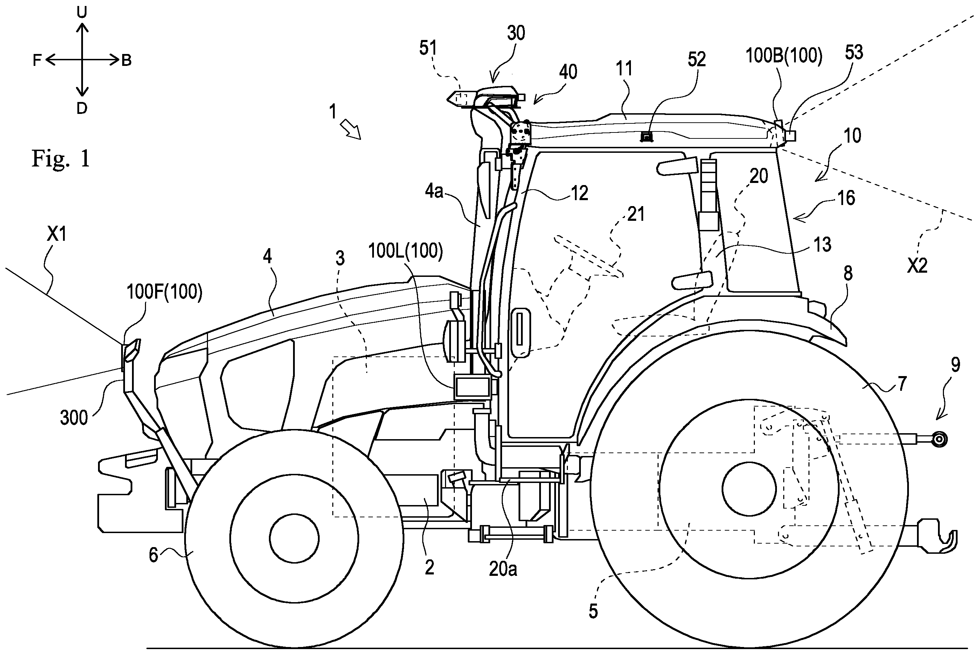

The tractor 1 shown in Fig. 1 mainly includes a machine body frame 2, an engine 3, a hood 4, a transmission casing 5, front wheels 6, rear wheels 7, a fender 8, a lifting device 9, a cabin 10, a seat 20, a steering wheel 21, and the like.

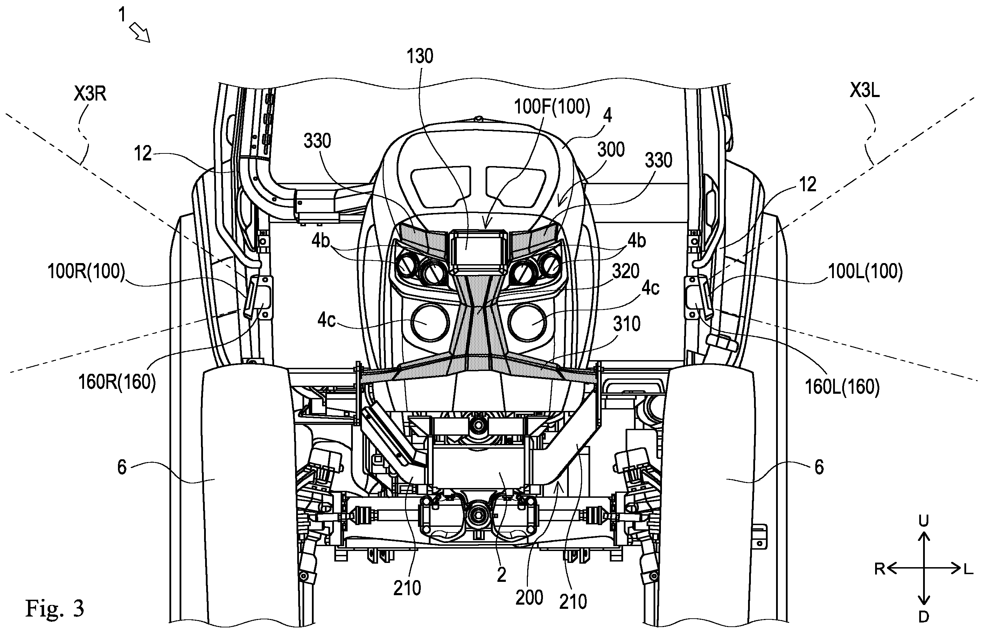

The machine body frame 2 is a frame-like member formed by appropriately combining a plurality of panel members. The machine body frame 2 is formed in a substantially rectangular shape in a planar view. The machine body frame 2 is disposed in a front portion of the tractor 1, with its longitudinal direction oriented in the front-back direction. The engine 3 is fixed to a rear portion of the machine body frame 2. The engine 3 is covered with the hood 4. The transmission casing 5 is fixed to a rear portion of the engine 3. A muffler 4a that discharges exhaust gas from the engine 3 is disposed on the right side of the hood 4. Further, as shown in Fig. 3, working lamps 4b and headlights 4c are provided on the front surface of the hood 4. The working lamps 4b and the headlights 4c are provided on both left and right sides of the front surface of the hood 4 at intervals in a lateral direction.

The front portion of the machine body frame 2 is supported by the pair of left and right front wheels 6 through a front axle mechanism (not shown). The rear portion of the transmission casing 5 is supported by the pair of left and right rear wheels 7 through a rear axle mechanism (not shown). The pair of left and right rear wheels 7 is covered with the fender 8 substantially from above.

The lifting device 9 is provided at the rear portion of the transmission casing 5. Various working devices (such as a cultivator, for example) can be attached to the lifting device 9. The lifting device 9 can lift up and down an attached working device with an actuator such as a hydraulic cylinder. Power of the engine 3 can be transmitted to the lifting device 9 through a PTO shaft (not shown).

Power of the engine 3 can be transmitted to the front wheels 6 via the front axle mechanism and be transmitted to the rear wheels 7 via the rear axle mechanism, after being shifted by a transmission (not shown) housed in the transmission casing 5. The front wheels 6 and the rear wheels 7 are rotationally driven by the power of the engine 3, so that the tractor 1 can move. Also, the working device attached to the lifting device 9 can be driven by the power of the engine 3.

The cabin 10 is provided behind the engine 3. The cabin 10 is placed on a vehicle body (such as the transmission casing 5). The living space the driver gets in is formed inside the cabin 10.

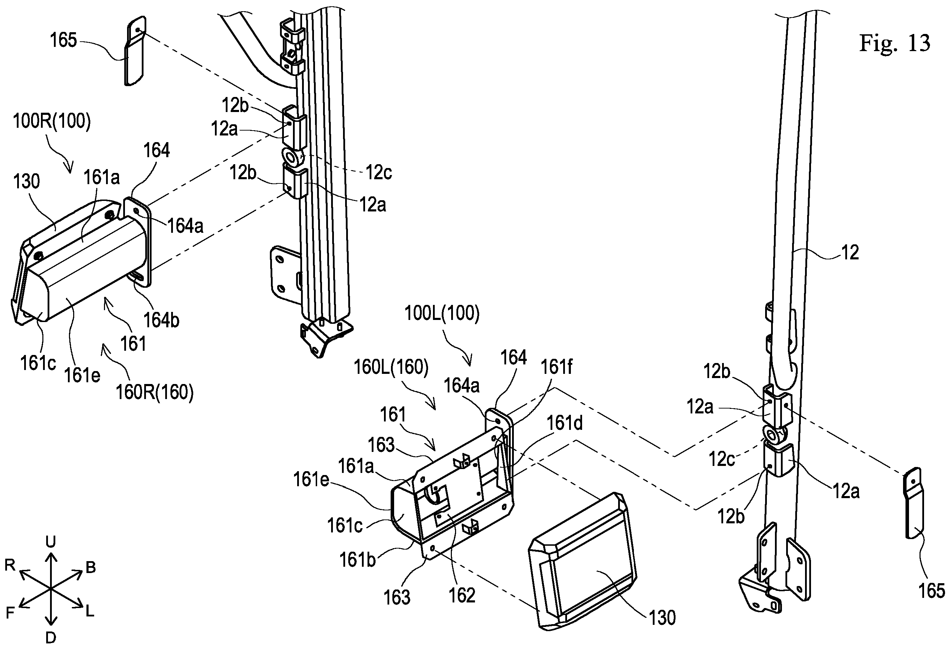

As shown in Fig. 1, the cabin 10 has left and right front pillars 12 that support a roof 11 at the front portion. Fixing portions 12a for fixing a left radar unit 100L and a right radar unit 100R to be described later are provided at middle portions of the left and right front pillars 12 in a vertical direction (see Fig. 13). The fixing portions 12a are formed on the front surfaces of the front pillars 12. The cabin 10 also has left and right rear pillars 13 that support the roof 11 at the rear portion.

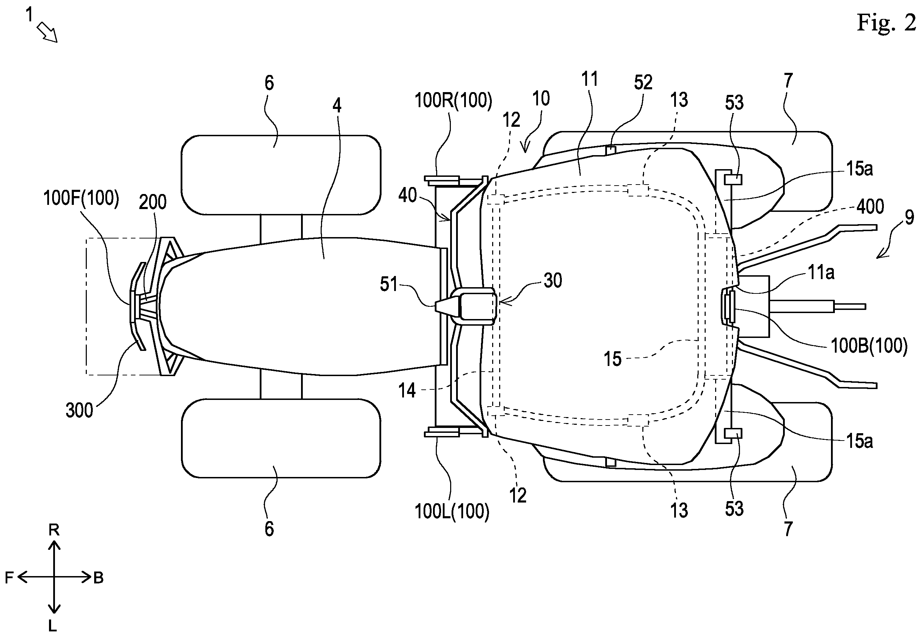

As shown in Fig. 2, the cabin 10 has a front beam 14 that connects the upper ends of the front pillars 12 to each other. A windshield is provided in the frame formed by the front beam 14 and the left and right front pillars 12. The cabin 10 also has a rear beam 15 that connects the upper ends of the rear pillars 13 to each other. Further, as shown in Fig. 1, an openable and closable rear hatch 16 is provided at the rear portion of the cabin 10. The rear hatch 16 is rotatably supported at the rear end of the rear beam 15. Furthermore, as shown in Fig. 2, a pair of stays 15a to which appropriate members can be attached is provided on the rear surface of the rear beam 15, with a distance being kept between the stays 15a in the lateral direction. Working lamps, a low-speed vehicle mark, and the like are provided on the stays 15a.

The front pillars 12, the rear pillars 13, the front beam 14, and the rear beam 15 are formed in a hollow-like shape. Wiring lines connected to devices (for example, radar units 100 to be described later) provided in the tractor 1 can be inserted into the internal space formed by the respective pillars and the respective beams.

As shown in Fig. 1, the seat 20 on which the driver is to sit is disposed substantially at the center of the cabin 10. Also, an auxiliary step 20a for getting on and off the seat 20 is attached to the cabin 10. The auxiliary step 20a is installed at least on the left side of the cabin 10. Note that the auxiliary step 20a can be installed on both sides of the cabin 10. Further, the steering wheel 21 for adjusting the turning angle of the front wheels 6 is disposed in the front portion of the cabin 10.

Also, as illustrated in Figs. 1 and 2, the tractor 1 includes: a position detecting device 30 capable of detecting the position of the vehicle body; cameras (a front camera 51, side cameras 52, and back cameras 53) capable of capturing images of the surroundings of the vehicle body; and radar units 100 capable of detecting a detection target that is present around the vehicle body.

The position detecting device 30 is a device capable of detecting the position (location information including the latitude and longitude) of the vehicle body, using a satellite positioning system such as a GPS, various sensors, or the like. The tractor 1 can perform control for autonomously steering the vehicle body, on the basis of the location information detected by the position detecting device 30. The above control includes control for autonomously steering the vehicle body so as to travel straight in parallel to a predetermined traveling reference line that has been set, and control for autonomously driving the vehicle body along a created target traveling route, for example.

The position detecting device 30 is supported by a support mechanism 40 attached to the cabin 10. The support mechanism 40 is disposed across the left and right front pillars 12. The support mechanism 40 is disposed so as to be located in front of the roof 11. Also, the support mechanism 40 is designed to be able to rotate, with respect to the left and right front pillars 12, about a central axis extending in the lateral direction, through left and right connecting portions. Note that the support mechanism 40 may be fixed to the left and right front pillars 12 in a non-rotatable manner. As shown in Fig. 2, the position detecting device 30 is disposed substantially at the center of the support mechanism 40 in the lateral direction.

A plurality (five in the present embodiment) of cameras (the front camera 51, the side cameras 52, and the back cameras 53) shown in Figs. 1 and 2 is provided in the cabin 10. Specifically, the front camera 51 is provided in a front portion (more specifically, the portion corresponding to the one side on the front of the cabin 10 formed in a rectangular shape in a planar view) of the cabin 10. The pair of left and right side cameras 52 is provided on both left and right side portions (more specifically, the portion corresponding to the left and right sides of the cabin 10 formed in a rectangular shape in a planar view) of the cabin 10. The pair of left and right back cameras 53 is provided at a rear portion (more specifically, the portion corresponding to the one side on the back side of the cabin 10 formed in a rectangular shape in a planar view) of the cabin 10.

Each camera is disposed so as to face downward at an angle of approximately 45 degrees with respect to level ground. By making angles uniform in this manner, it is possible to improve the distance measurement performance of each camera, and optimize the field of view of each camera.

As each of the above cameras is used, images of views ahead of, on both the left and right sides of, and behind the tractor 1 can be captured. The tractor 1 can control the operation of the vehicle body, on the basis of the images captured by the respective cameras. For example, it is possible to learn the appearance of a person on the basis of images captured by the respective cameras, and perform control to stop the tractor 1 when the person approaches the vicinity of the tractor 1 on the basis of the results of imaging performed by the respective cameras. Note that the use of the respective cameras is not limited to this, and captured images can be used for various purposes.

In the following, the radar units 100 are described. The radar units 100 can detect a detection target within a predetermined detection range. Examples of detection targets include a structure formed with metal or concrete, another vehicle, a person, and the like.

As shown in Figs. 1 and 2, in the present embodiment, a plurality of (four) radar units 100 (a front radar unit 100F, a back radar unit 100B, the left radar unit 100L, and the right radar unit 100R) is provided in the tractor 1. Specifically, the front radar unit 100F is provided on a front portion of the hood 4 of the tractor 1. Also, the back radar unit 100B is provided on a rear portion of the cabin 10. Further, the left radar unit 100L is provided on a left portion of the cabin 10, and the right radar unit 100R is provided on a right portion of the cabin 10.

In the following, the configurations of the respective radar units 100 are described in order. Note that, of the radar units 100, the front radar unit 100F and the back radar unit 100B are designed to have configurations similar to each other. Furthermore, the left radar unit 100L and the right radar unit 100R are formed to be symmetrical to each other. Therefore, in the following description of the respective radar units 100, explanation of a configuration similar to a configuration already described or bilaterally symmetrical configurations will not be made where appropriate.

Further, the respective radar units 100 each include members (a radar main body 110, an attenuator 120, a radar cover 130, and a sealing member 140, all of which will be described later) that are components similar among these radar units. Therefore, in the following description, when the members of one radar unit 100 (the front radar unit 100F, for example) are described, the members of another radar unit 100 (the back radar unit 100B, the left radar unit 100L, or the like) will be described in some cases with reference to the drawings.

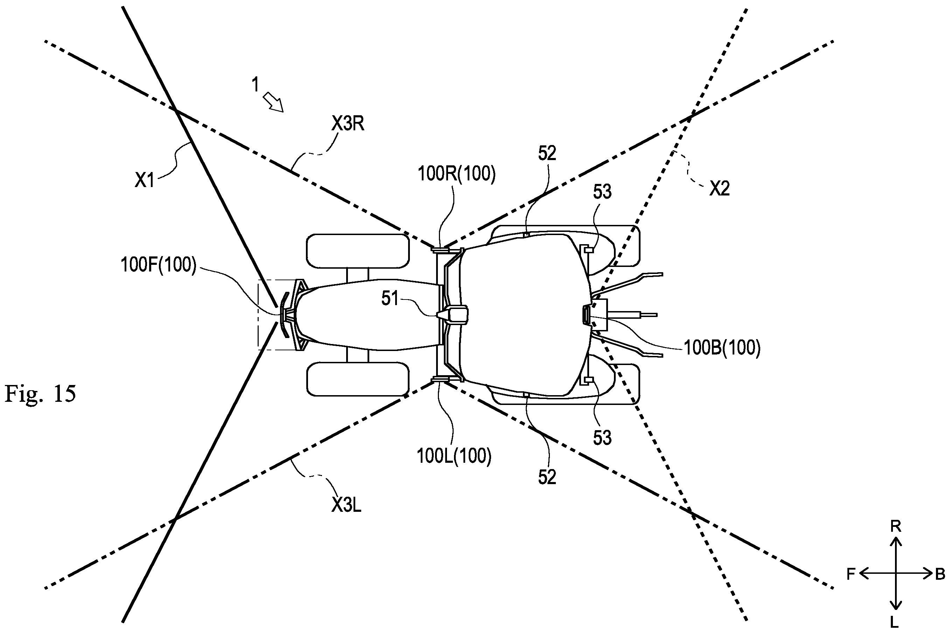

The front radar unit 100F shown in Figs. 1 to 6 can detect a detection target that is present in front of the tractor 1. The front radar unit 100F is disposed so as to be located in front of the hood 4. The front radar unit 100F is disposed so as to face substantially frontward. With this arrangement, the front radar unit 100F can perform detection in the detection range (a front detection range X1) in front of the hood 4 (see Figs. 1 and 15). The front radar unit 100F includes a radar main body 110, an attenuator 120, a radar cover 130, a sealing member 140, and an attachment stay 150.

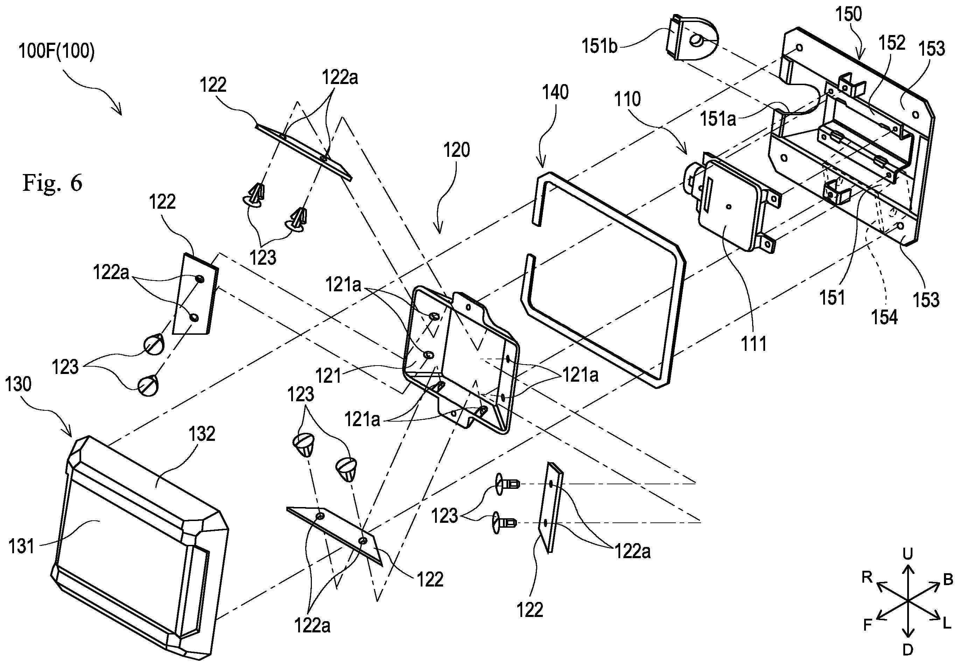

The radar main body 110 shown in Fig. 6 detects a detection target, using radio waves (millimeter waves, for example). Specifically, the radar main body 110 emits radio waves, and receives radio waves reflected by a detection target, to detect the detection target. As the radar main body 110, a millimeter wave sensor can be adopted. The radar main body 110 is fixed to the attachment stay 150 described later. The radar main body 110 has an emission surface 111 that emits radio waves. The radar main body 110 is disposed so that the emission surface 111 faces substantially frontward. The emission surface 111 is formed in a substantially rectangular shape in a front view. Wiring lines (not shown) are connected to the radar main body 110 as appropriate.

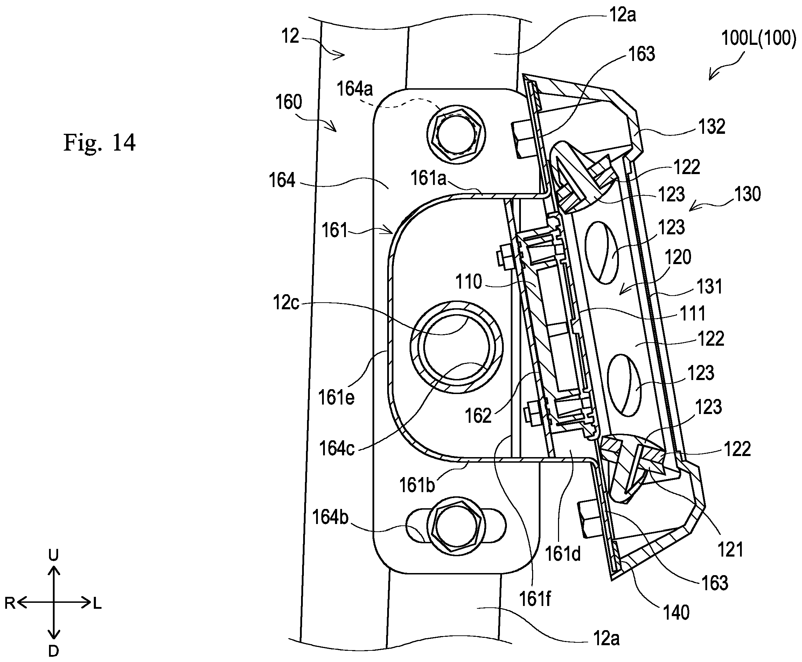

Of the radio waves from the radar main body 110, the attenuator 120 can attenuate sidelobe waves generated outside the detection range. The attenuator 120 is formed in a cylindrical shape that is a substantially quadrangular frustum. The attenuator 120 is formed to be open in the front-back direction. Also, the attenuator 120 is formed so that the sidewalls of the cylindrical portion are wider in the vertical direction and the lateral direction at a position farther ahead in the (frontward) direction of radio wave emission. The attenuator 120 is disposed in front of the emission surface 111 of the radar main body 110 (see Fig. 14). The attenuator 120 is disposed so that its rear opening overlaps the emission surface 111 of the radar main body 110 when viewed from a direction perpendicular to the emission surface 111 (in a substantially front view). The attenuator 120 is fixed to the attachment stay 150 described later. The attenuator 120 includes a main body portion 121, radio wave absorbers 122, and rivets 123.

The main body portion 121 is the main structural body of the attenuator 120. That is, the main body portion 121 is formed in a cylindrical shape that is a substantially quadrangular frustum. The main body portion 121 is formed with resin, for example. The inner surfaces of the four sidewalls constituting the main body portion 121 are formed substantially along the detection range (front detection range X1). Holes 121a penetrating the respective sidewalls are formed in the four sidewalls. Two holes 121a are formed in each sidewall.

The radio wave absorbers 122 absorb sidelobe waves on the inner surface side of the main body portion 121. As the radio wave absorbers 122, it is possible to adopt a radio-wave absorbing material (RAM) having high radio wave absorption performance in a radio wave frequency band (79 GHz band, for example) that is used by the radar main body 110. Note that the material of the radio wave absorbers 122 can be changed as appropriate, depending on the radio wave frequency band used by the radar main body 110.

The radio wave absorbers 122 are formed in sheet-like shapes. The radio wave absorbers 122 are formed in shapes corresponding to those of the inner surfaces of the four sidewalls of the main body portion 121, and are fixed to the inner surfaces of the respective sidewalls. The radio wave absorbers 122 are bonded to the inner surfaces of the main body portion 121 with a double-sided tape, an adhesive, or the like, for example. Holes 122a corresponding to the holes 121a of the main body portion 121 are formed in the radio wave absorbers 122.

The rivets 123 are inserted into the holes 121a of the main body portion 121 and the holes 122a of the radio wave absorbers 122. The rivets 123 each have a shaft portion to be inserted into the hole 121a and the hole 122a, and a head portion made larger in diameter than the shaft portion. Further, a retaining portion that prevents the rivet from coming off the main body portion 121 is formed at the shaft portion of each of the rivets 123. The rivets 123 are formed with resin, for example. As the rivets 123 are inserted into the holes 121a and the holes 122a, the radio wave absorbers 122 can be positioned with respect to the main body portion 121. Furthermore, as the rivets 123 are provided, the radio wave absorbers 122 can be prevented from coming off the main body portion 121.

The radar cover 130 covers the emission surface 111 of the radar main body 110, and the attenuator 120. The radar cover 130 is formed in a substantially box-like shape that is open toward the back. The radar cover 130 is formed so as to be able to accommodate the attenuator 120 in an internal space (see Fig. 14). The radar cover 130 is formed with a material through which radio waves (electromagnetic waves) from the radar main body 110 can pass. In the present embodiment, the radar cover 130 is formed with resin. The radar cover 130 includes a covering portion 131 and an outside portion 132.

Radio waves from the emission surface 111 of the radar main body 110 pass through the covering portion 131. The covering portion 131 is formed so as to overlap the emission surface 111 in a substantially front view. In the present embodiment, the covering portion 131 is formed to be wider than the emission surface 111. The thickness (front-rear dimension) of the covering portion 131 is designed to be substantially uniform (see Fig. 14). The covering portion 131 is disposed so as to be parallel to the emission surface 111. In a case where the thickness of the covering portion 131 is uneven, there is a possibility that detection by the radar main body 110 will be adversely affected. As the thickness of the covering portion 131 is formed to be substantially uniform as in the present embodiment, it is possible to increase the accuracy of detection by the radar main body 110.

The outside portion 132 is a portion on the outer side of the covering portion 131, and the outside portion 132 is formed in a frame-like shape that surrounds the four peripheral portions of the covering portion 131. The thickness of the outside portion 132 is formed to be greater than the thickness of the covering portion 131.

The sealing member 140 closes the gap between the radar cover 130 and the attachment stay 150 to be described later. The sealing member 140 is formed in a frame-like shape corresponding to the shape of the opening of the rear portion of the radar cover 130. Note that, in the present embodiment, part of the right portion of the sealing member 140 is cut away so as to avoid a grommet 151b to be described later. As the sealing member 140 is provided, it is possible to prevent dust and water from entering the gap between the radar cover 130 and the attachment stay 150.

The attachment stay 150 has the radar main body 110, the attenuator 120, and the radar cover 130 fixed thereto, and is attached to the vehicle body of the tractor 1. The attachment stay 150 is formed with a metallic or resin material. The attachment stay 150 includes an accommodating portion 151, a radar fixing portion 152, cover fixing portions 153, and a connecting portion 154.

The accommodating portion 151 is a portion that accommodates the radar main body 110. The accommodating portion 151 is formed in a substantially box-like shape that is open substantially frontward. The accommodating portion 151 is formed in a substantially rectangular shape in a front view. A cutout 151a for drawing out the wiring lines of the radar main body 110 is formed in the right sidewall of the accommodating portion 151. The cutout 151a is formed by cutting the sidewall rearward from the front end. The grommet 151b for protecting the wiring lines is attached to the cutout 151a. The grommet 151b is formed with a flexible material such as rubber. In the present embodiment, the front portion of the grommet 151b is located in a cutout portion of the sealing member 140. The front portion of the grommet 151b, together with the sealing member 140, closes the gap between the radar cover 130 and the attachment stay 150.

The radar fixing portion 152 is a portion for fixing the radar main body 110 in the accommodating portion 151. The radar fixing portion 152 is provided on the rear-side wall of the accommodating portion 151. The radar main body 110 is fixed to the radar fixing portion 152 with fasteners such as bolts.

The cover fixing portions 153 are portions for fixing the radar cover 130. The cover fixing portions 153 extend upward and downward from the opening of the accommodating portion 151. The cover fixing portions 153 are formed in a substantially plate-like shape, with the plate surfaces facing substantially the front-back direction. The radar cover 130 is fixed to the cover fixing portions 153 with fasteners such as bolts. The sealing member 140 is disposed between the cover fixing portions 153 and the radar cover 130. Further, the attenuator 120 (the main body portion 121) is fixed to the cover fixing portions 153. The main body portion 121 is fixed to the cover fixing portions 153 with fasteners such as bolts.

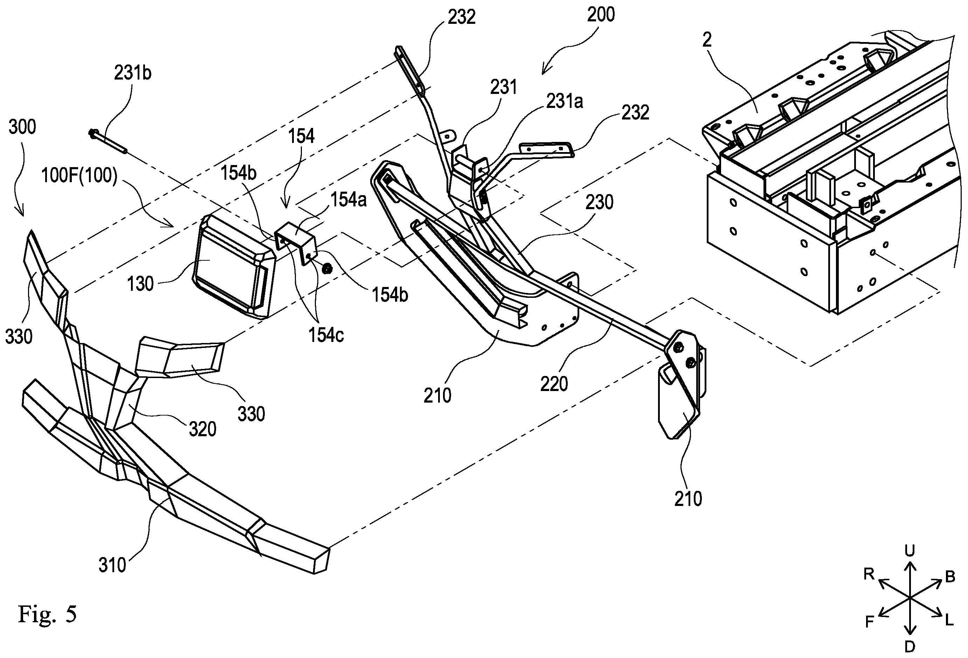

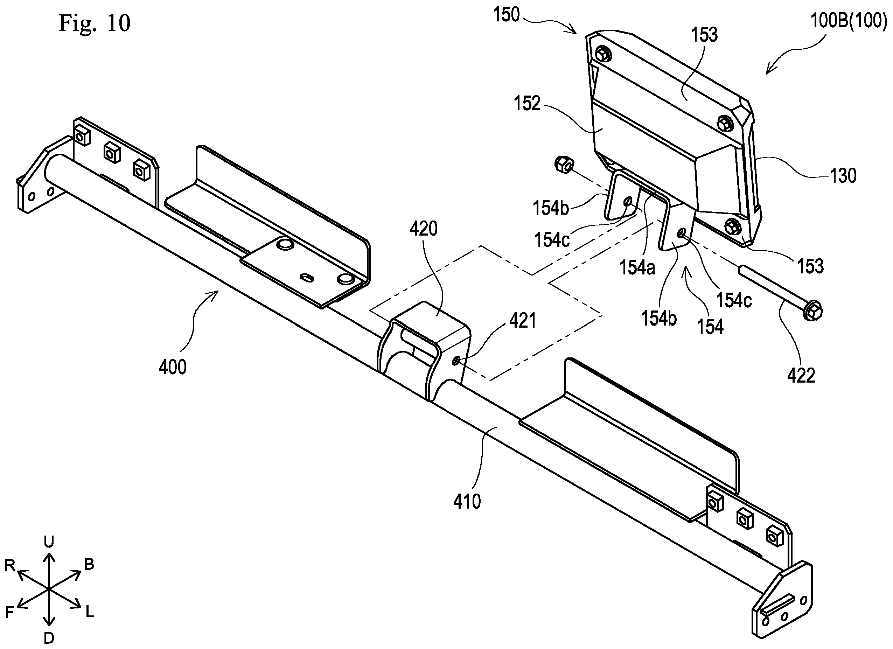

The connecting portion 154 shown in Fig. 5 is a portion to be connected to a front support member 200 described later. Note that the connecting portion 154 will be described later with reference also to Fig. 10 showing the attachment stay 150 of the back radar unit 100B. The connecting portion 154 is provided so as to protrude downward from the lower surface of the accommodating portion 151. The connecting portion 154 is formed by bending a metallic plate substantially into a U-shape. The connecting portion 154 includes a fixing piece 154a to be fixed to the lower surface of the accommodating portion 151, and a pair of connecting pieces 154b extending downward from both end portions of the fixing piece 154a in the lateral direction. Holes 154c penetrating in the lateral direction are formed in the connecting pieces 154b.

In the front radar unit 100F as described above, the radar main body 110 and the attenuator 120 are accommodated in the space formed by the radar cover 130 and the attachment stay 150. In the front radar unit 100F, the emission surface 111 of the radar main body 110 is covered with the radar cover 130, so that adhesion of foreign matter such as mud to the emission surface 111 can be prevented, and accuracy of detection using radio waves can be increased. Also, the radar main body 110 and the attenuator 120 are covered with radar cover 130, so that the appearance can be improved.

Further, as the respective members constituting the front radar unit 100F are integrated into a unit, attachment properties with respect to the tractor 1 can be improved. Also, in the present embodiment, the radar main body 110 and the attenuator 120 are fixed to the attachment stay 150, so that the position of attachment of the attenuator 120 with respect to the radar main body 110 can be less likely to vary.

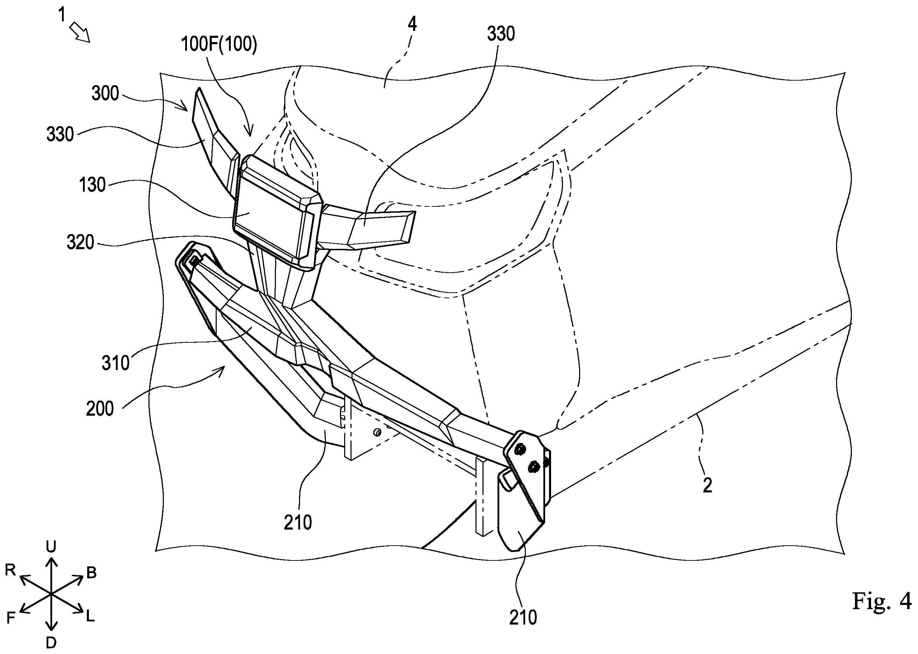

As shown in Figs. 4 and 5, the front radar unit 100F is attached to the vehicle body of the tractor 1 by the front support member 200. Further, the front surface of the front support member 200 is covered with a design cover 300. In the following description, the front support member 200 and the design cover 300 are described.

The front support member 200 shown in Figs. 4, 5, and 7 is fixed to the vehicle body of the tractor 1, and supports the front radar unit 100F. Specifically, the front support member 200 is fixed to a portion of the vehicle body below the hood 4 (a front portion of the machine body frame 2 in the present embodiment), and supports the front radar unit 100F to be located in front of the hood 4. The front support member 200 includes first portions 210, a second portion 220, and a third portion 230.

The first portions 210 are portions fixed to the front portion of the machine body frame 2. A pair of the first portions 210 is provided so as to be located on both the left and right sides of the machine body frame 2. The pair of first portions 210 is fixed to the left and right side surfaces of the front portion of the machine body frame 2 with bolts or the like. The first portions 210 are each formed in a shape extending obliquely forward and upward from the front portion of the machine body frame 2. Further, the pair of first portions 210 is formed in shapes that are farther apart from each other at a higher position.

The second portion 220 is a portion that connects the upper ends of the pair of first portions 210 to each other. The second portion 220 is formed in a shape that is long in the lateral direction.

The third portion 230 extends upward from the second portion 220, and is a portion to which the front radar unit 100F is connected. Specifically, the third portion 230 extends obliquely forward and upward from the central portion of the second portion 220 in the lateral direction. The third portion 230 is formed integrally with the second portion 220 by welding or the like. The third portion 230 includes a connecting portion 231 and cover support portions 232.

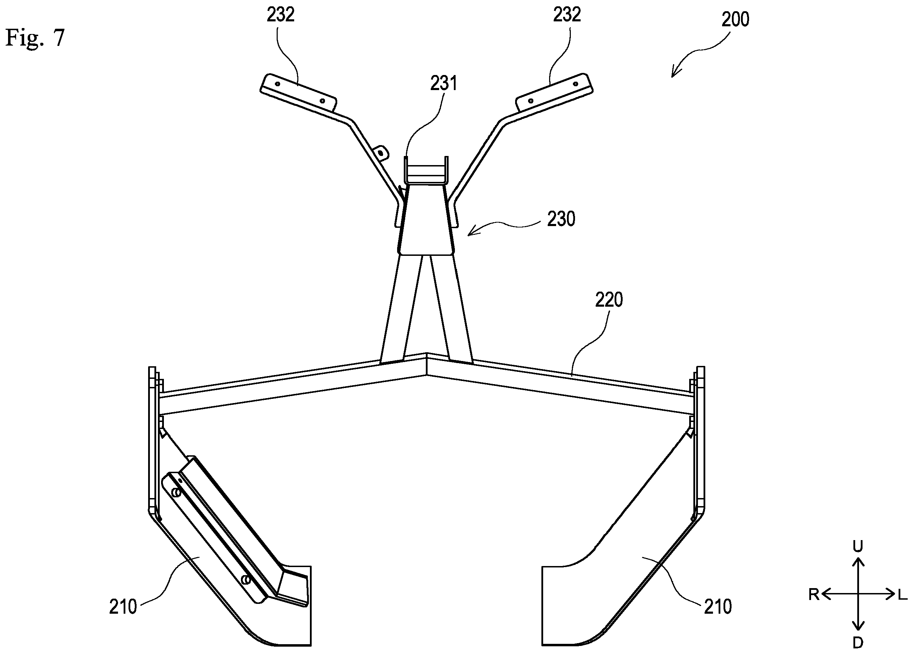

The connecting portion 231 shown in Figs. 5 and 7 is the portion to which the front radar unit 100F is connected. The connecting portion 231 constitutes the upper end of the third portion 230. The connecting portion 231 has holes 231a penetrating in the lateral direction. The connecting portion 231 is sandwiched between the pair of connecting pieces 154b of the connecting portion 154 of the attachment stay 150. In this state, the holes 231a of the connecting portion 231 and the holes 154c of the connecting pieces 154b overlap each other in a side view. In the present embodiment, a fastening portion 231b formed with a bolt and a nut or the like is inserted into the holes 231a and the holes 154c, to connect the attachment stay 150 to the connecting portion 231.

The cover support portions 232 are portions that support third covers 330 of the design cover 300 described later. A pair of the cover support portions 232 is provided so as to be located on both the left and right sides of the upper portion of the third portion 230. The pair of cover support portions 232 extends upward from the central portion of the third portion 230 in the lateral direction, and is formed to have shapes that are farther apart from each other at a higher position.

The front radar unit 100F is connected to the front support member 200 so as to be able to adjust the position of rotation, with the center of rotation being a rotating shaft extending in the lateral direction. Specifically, in a state where fastening by the fastening portion 231b, which is the rotating shaft, has been canceled, the front radar unit 100F can change the position of rotation with respect to the front support member 200. In a state where fastening has been performed by the fastening portion 231b, on the other hand, the position of rotation of the front radar unit 100F with respect to the front support member 200 is fixed. In the present embodiment, the position of rotation of the front radar unit 100F is set so that the emission surface 111 faces slightly upward with respect to level ground (so that the elevation angle is adjusted to about 10°).

The design cover 300 shown in Figs. 3 to 5 covers the front surface of the front support member 200. Specifically, the design cover 300 covers the front surfaces of the second portion 220 and the third portion 230 of the front support member 200. Note that, in Fig. 3, the design cover 300 is shaded. The design cover 300 is formed so as not to block the front surface of front radar unit 100F. The design cover 300 is formed with resin or the like, for example. The design cover 300 is fixed to the front support member 200 with fasteners such as bolts. The design cover 300 includes a first cover 310, a second cover 320, and the third covers 330.

The first cover 310 is a portion that covers the second portion 220 of the front support member 200. The first cover 310 is formed in a shape corresponding to that of the second portion 220.

The second cover 320 is a portion that covers a portion of the third portion 230 of the front support member 200 excluding the cover support portion 232. The second cover 320 is formed in a shape corresponding to that of the portion of the third portion 230. Also, the second cover 320 is formed so as not to block the working lamps 4b and the headlights 4c on the front surface of the hood 4 in a front view. Specifically, the second cover 320 is located between the left and right working lamps 4b and the headlights 4c, and is formed in a shape that does not overlap the working lamps 4b and the headlights 4c on the front surface of the hood 4 in a front view.

The third covers 330 are portions that cover the front surfaces of the cover support portions 232. The third covers 330 constitute the upper end of the design cover 300. The third covers 330 are formed so as to extend from the portion at which the front radar unit 100F is located (the central portion of the design cover 300 in the lateral direction), to both sides in the lateral direction.

As shown in Fig. 3, the third covers 330 are formed in a shape corresponding to that of the upper end of the front surface of the hood 4 in a front view. Specifically, the third covers 330 are formed in shapes corresponding to those of boundary portions between the front surface and the upper surface of the hood 4. The left and right third covers 330 are formed in shapes that are inclined upward at outer positions in the lateral direction. The upper ends of the left and right third covers 330 are located at higher positions than the front radar unit 100F.

Also, the third covers 330 are formed to be visually recognizable from the driver seated on the seat 20 in the cabin 10. The driver can use the end portions of the third covers 330 in the lateral direction as the guides in driving the tractor 1. The third covers 330 according to the present embodiment can be used as marks indicating a ridge width or the like.

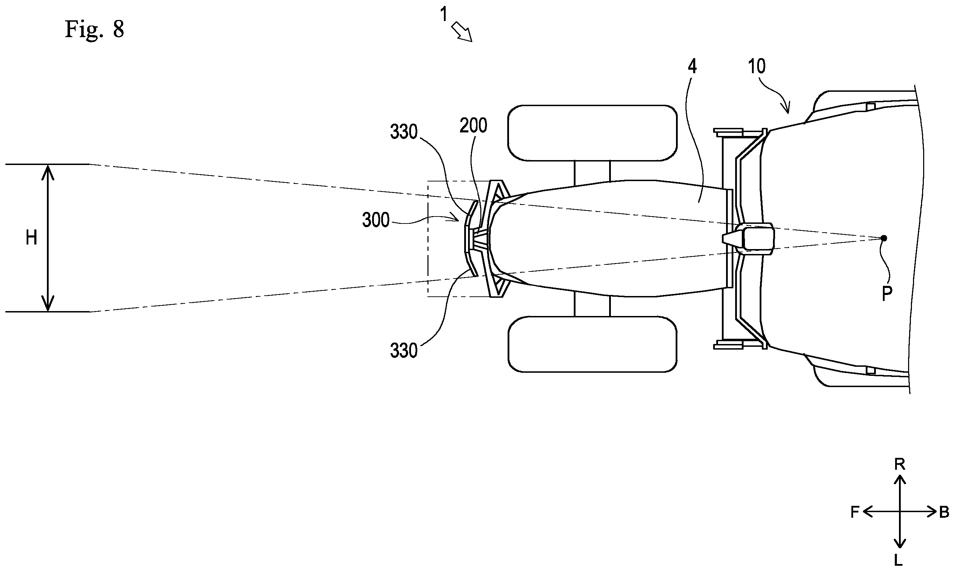

Specifically, as shown in Fig. 8, in a case where a pair of straight lines connecting the point of view P of the driver seated on the seat 20 and the end portions of the third covers 330 in the lateral direction is extended frontward in a planar view, the lateral distance between the pair of straight lines matches a lateral width H (a ridge width, for example) at a certain point in front of the tractor 1. In this case, as viewed from the driver, the lateral width of the third covers 330 substantially matches the lateral width H at a certain point in front of the tractor 1. Thus, the driver can drive the tractor 1, using the third covers 330 as a mark indicating the ridge width at a certain point in front of the tractor 1. Note that the lateral dimension of the third covers 330 can be set as appropriate, with the ridge width or the like being taken into consideration.

As the design cover 300 described above is provided, the front support member 200 can be prevented from being exposed, and the appearance can be improved. Furthermore, in the present embodiment, the third covers 330 are formed in a shape corresponding to that of the front surface of the hood 4 in a front view, so that the appearance can be further improved.

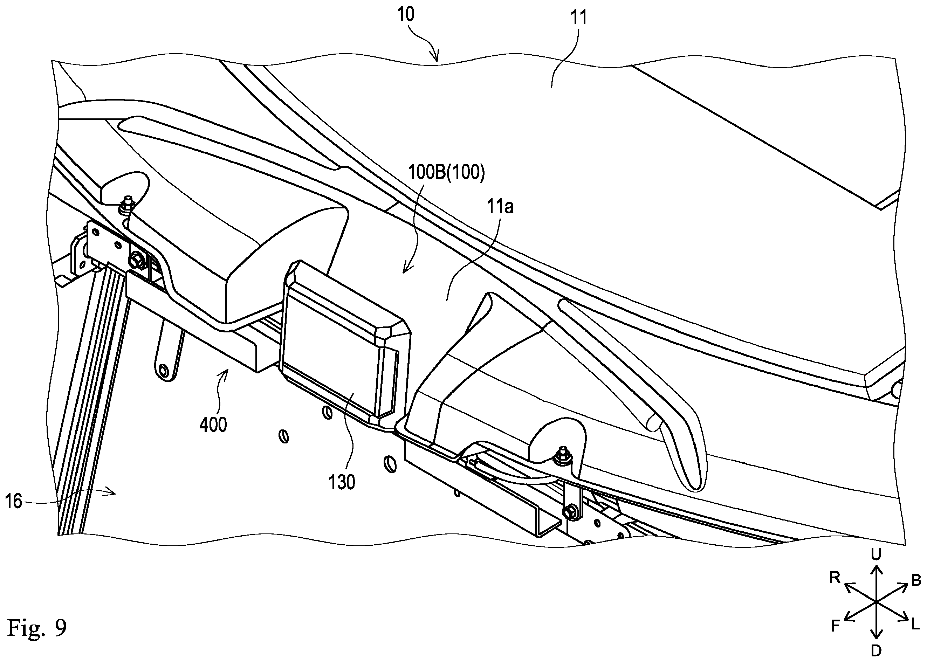

Next, the back radar unit 100B is described with reference to Figs. 9 to 11. The back radar unit 100B can detect a detection target that is present behind the tractor 1. Note that the configuration of the back radar unit 100B is the same as that of the front radar unit 100F. Therefore, the placement and attachment modes of the back radar unit 100B are mainly described below, and explanation of the configuration of the back radar unit 100B is omitted.

The back radar unit 100B is disposed on a rear portion of the roof 11 of the cabin 10. Specifically, the back radar unit 100B is disposed in a recess 11a formed to be recessed frontward at the center of the rear portion of the roof 11 in the lateral direction. The back radar unit 100B is disposed so as to face substantially backward. With this arrangement, the back radar unit 100B can perform detection in a detection range (a back detection range X2) behind the cabin 10 (see Figs. 1 and 15).

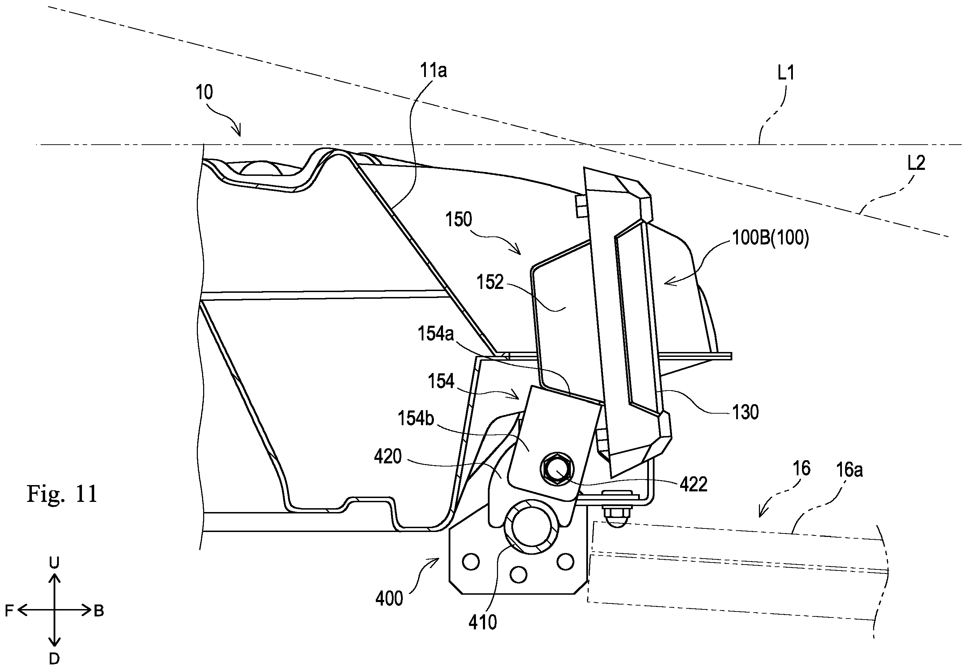

As shown in Figs. 10 and 11, the back radar unit 100B is attached to the vehicle body of the tractor 1 by a back support member 400. In the following, the back support member 400 is described.

The back support member 400 is fixed to the vehicle body of the tractor 1, and supports the back radar unit 100B. Specifically, the back support member 400 is fixed to a rear portion of the rear beam 15 of the cabin 10 of the tractor 1, and supports the back radar unit 100B to be located in the recess 11a of the roof 11. The back support member 400 includes a support frame 410 and a connecting portion 420.

The support frame 410 shown in Fig. 10 is a portion fixed to the rear portion of the rear beam 15. The support frame 410 is formed in a shape that is long in the lateral direction. Both ends of the support frame 410 in the lateral direction are fixed to the pair of stays 15a provided on the rear beam 15 with bolts or the like (see Fig. 2).

The connecting portion 420 is a portion to which the back radar unit 100B is connected. The connecting portion 420 is provided substantially at the center of the support frame 410 in the lateral direction. The connecting portion 420 has holes 421 penetrating in the lateral direction. The connecting portion 420 is sandwiched between the pair of connecting pieces 154b of the connecting portion 154 of the attachment stay 150. In this state, the holes 421 of the connecting portion 420 and the holes 154c of the connecting pieces 154b overlap in a side view. In the present embodiment, a fastening portion 422 formed with a bolt and a nut or the like is inserted into the holes 421 and the holes 154c, to connect the attachment stay 150 to the connecting portion 420.

The back radar unit 100B is connected to the back support member 400 so as to be able to adjust the position of rotation, with the center of rotation being a rotating shaft extending in the lateral direction. Specifically, in a state where fastening by the fastening portion 422, which is the rotating shaft, has been canceled, the back radar unit 100B can change the position of rotation with respect to the back support member 400. In a state where fastening has been performed by the fastening portion 422, the position of rotation of the back radar unit 100B with respect to the back support member 400 is fixed. In the present embodiment, the position of rotation of the back radar unit 100B is set so that the emission surface 111 faces slightly upward with respect to level ground (so that the elevation angle is adjusted to about 5°).

As the back support member 400 positions the back radar unit 100B at the height of the roof 11, any working device provided behind the vehicle body can be prevented from being located in the back detection range X2 of the back radar unit 100B (see Fig. 1). Thus, the back radar unit 100B can be prevented from erroneously detecting a working device.

Also, as shown in Fig. 11, the back support member 400 supports the back radar unit 100B so that the back radar unit 100B accommodated in the recess 11a of the roof 11 is located at a position lower than the height of the roof 11. More specifically, the back support member 400 supports the back radar unit 100B to be located below a horizontal overall height line L1. Here, the horizontal overall height line L1 indicates the maximum height (the height of the upper end) of the roof 11 of the tractor 1 in a substantially horizontal posture. As the back radar unit 100B is located below the horizontal overall height line L1, when the tractor 1 is put into a container that is used for transportation, or into a garage or the like, for example, the back radar unit 100B can be prevented from coming into contact with the ceiling of the container or the like.

Further, in the present embodiment, the back support member 400 supports the back radar unit 100B to be located below an inclined overall height line L2. Here, the inclined overall height line L2 indicates the maximum height (the height of the upper end) of the tractor 1 in a state where the tractor 1 is inclined so that the rear portion of the roof 11 is located at a higher position than the front portion of the roof 11. The inclined overall height line L2 is set on the basis of the angle of inclination of a gangplank placed between a container or the like and the ground when the tractor 1 is loaded into or unloaded from the container on the loading platform of a transportation unit. In the present embodiment, the inclined overall height line L2 is set to indicate the maximum height of the tractor 1 inclined by about 15° with respect to level ground. As the back radar unit 100B is located at a position lower than the inclined overall height line L2, the tractor 1 can be prevented from coming into contact with the ceiling of a container or the like when the tractor 1 is inclined and is put into the container.

Furthermore, in the present embodiment, in a state where a wiper 16a provided on the rear hatch 16 is operated while the rear hatch 16 of the cabin 10 of the tractor 1 is fully open, the back radar unit 100B is located at a position higher than the wiper 16a of the rear hatch 16 in the fully opened state, so that the wiper 16a and the back radar unit 100B do not interfere with each other.

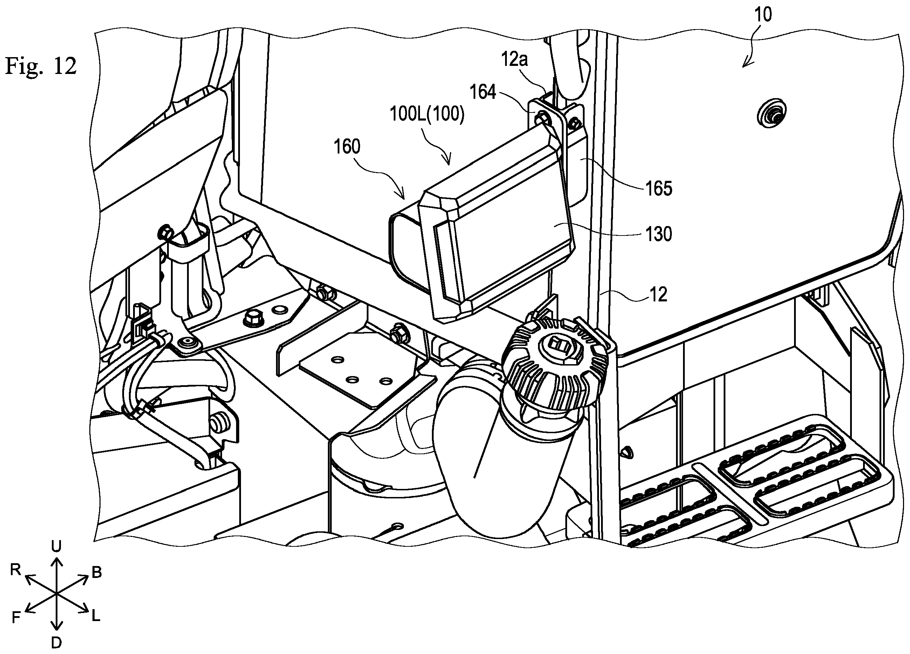

Next, the left radar unit 100L and the right radar unit 100R are described with reference to Figs. 12 and 13. The left radar unit 100L and the right radar unit 100R can detect detection targets that are present on the left and right sides of the tractor 1.

The left radar unit 100L and the right radar unit 100R are disposed on the left and right sides of the cabin 10, respectively. Specifically, the left radar unit 100L and the right radar unit 100R are attached to the pair of left and right front pillars 12, respectively. The left radar unit 100L and the right radar unit 100R are disposed so as to face substantially leftward and rightward. With this arrangement, the left radar unit 100L and the right radar unit 100R can perform detection in a detection range (a left detection range X3L) on the left side of the cabin 10 and a detection range (a right detection range X3R) on the right side of the cabin 10 (see Figs. 2 and 15).

The left radar unit 100L and the right radar unit 100R each include a radar main body 110, an attenuator 120, a radar cover 130, a sealing member 140, and an attachment stay 160. Here, of the respective components, the portions excluding the attachment stay 160 (the portions being the radar main body 110, the attenuator 120, the radar cover 130, and the sealing member 140) are the same as the portions constituting the front radar unit 100F.

Furthermore, the left radar unit 100L and the right radar unit 100R are formed to be symmetrical to each other. Specifically, in the left radar unit 100L and the right radar unit 100R, the respective attachment stays 160 are formed in shapes that are bilaterally symmetrical to each other, and the portions (the radar main body 110, the attenuator 120, the radar cover 130, and the sealing member 140) excluding the attachment stay 160 are the same between the two units. Hereinafter, the attachment stay 160 of the left radar unit 100L will be referred to as the "attachment stay 160L", and the attachment stay 160 of the right radar unit 100R will be referred to as the "attachment stay 160R" (see Figs. 3 and 13).

Since the left radar unit 100L and the right radar unit 100R are formed symmetrically to each other as described above, the left radar unit 100L is mainly described below, and explanation of the right radar unit 100R is omitted where appropriate. Also, in the description below, the configuration of the attachment stay 160L is mainly explained, and explanation of the already described other portions (the radar main body 110, the attenuator 120, the radar cover 130, and the sealing member 140) is omitted.

The attachment stay 160L shown in Figs. 13 and 14 has the radar main body 110, the attenuator 120, and the radar cover 130 fixed thereto, and is attached to the front pillar 12. The attachment stay 160L has the radar main body 110 attached thereto so that the emission surface 111 of the radar main body 110 faces slightly upward with respect to level ground (so that the elevation angle is adjusted to about 10°). The attachment stay 160L is formed with a metallic material. The attachment stay 160L includes an accommodating portion 161, a radar fixing portion 162, cover fixing portions 163, and an attachment portion 164.

The accommodating portion 161 is a portion that accommodates the radar main body 110. The accommodating portion 161 is formed in a substantially box-like shape that is open in the direction (obliquely upward and leftward) in which the emission surface 111 of the radar main body 110 faces. The accommodating portion 161 includes: an upper wall 161a that is the wall on the upper side; a lower wall 161b that is the wall on the lower side; a front wall 161c that is the wall on the front side; a back wall 161d that is the wall on the back side; and a non-opening wall 161e that is the wall on the opposite side (right side) to the opening.

Of the respective walls, the non-opening wall 161e has a surface extending in a substantially vertical direction. Meanwhile, the upper wall 161a and the lower wall 161b have surfaces extending in a substantially horizontal direction. Further, the rim portion of the opening formed by the upper wall 161a, the lower wall 161b, the front wall 161c, and the back wall 161d of the accommodating portion 161 is formed in a shape substantially parallel to the emission surface 111 of the radar main body 110. Also, on the right side of the back wall 161d, a drawing opening 161f through which wiring lines of the radar main body 110 can be drawn out is formed.

The radar fixing portion 162 is a portion for fixing the radar main body 110 in the accommodating portion 161. The radar fixing portion 162 is formed in a substantially plate-like shape. The radar fixing portion 162 is disposed to be inclined with respect to the non-opening wall 161e so that the surface to which the radar main body 110 is fixed faces obliquely upward and leftward. The radar fixing portion 162 is fixed to the upper wall 161a and the lower wall 161b by welding or the like. The radar main body 110 is fixed to the radar fixing portion 162 with fasteners such as bolts. The radar main body 110 is fixed to the radar fixing portion 162, and is disposed so that the emission surface 111 faces obliquely upward and leftward with respect to level ground (so that the elevation angle is adjusted to about 10°).

The cover fixing portions 163 are portions for fixing the radar cover 130. The cover fixing portions 163 extend upward and downward from the opening of the accommodating portion 161. Specifically, the cover fixing portions 163 extend upward and downward from the left ends of the upper wall 161a and the lower wall 161b so as to be substantially parallel to the radar fixing portion 162, and are formed in a substantially plate-like shape, with the plate surfaces facing substantially diagonally upward and leftward. The radar cover 130 is fixed to the cover fixing portions 163 with fasteners such as bolts. The sealing member 140 is disposed between the cover fixing portions 163 and the radar cover 130.

Note that, unlike the attachment stay 150 (see Fig. 6), the grommet 151b to be provided in the cutout 151a is not formed for the attachment stay 160. Therefore, any cutout for avoiding the grommet 151b is not formed in the sealing member 140 of the left radar unit 100L.

The attachment portion 164 is a portion that is attached to the front pillar 12. The attachment portion 164 is fixed to the rear portion of the accommodating portion 161. Specifically, the attachment portion 164 is fixed to the accommodating portion 161 so as to cover the drawing opening 161f of the back wall 161d. The attachment portion 164 is formed in a substantially plate-like shape, with the plate surface facing the front-back direction. The attachment portion 164 is formed in a rectangular shape that is long in the vertical direction in a front view. The attachment portion 164 includes a first fixing hole 164a, a second fixing hole 164b, and a wiring drawing hole 164c.

The first fixing hole 164a is a fixing hole formed in the upper portion of the attachment portion 164. The first fixing hole 164a is formed so as to penetrate the upper portion of the attachment portion 164.

The second fixing hole 164b is a fixing hole formed in the lower portion of the attachment portion 164. The second fixing hole 164b is formed so as to penetrate the lower portion of the attachment portion 164. The second fixing hole 164b is formed in a long hole shape extending in the lateral direction. More specifically, the second fixing hole 164b is formed in a substantially arc-like shape along the circumference centered on the first fixing hole 164a.

The wiring drawing hole 164c is a hole through which the wiring lines of the radar main body 110 can be drawn out. The wiring drawing hole 164c is formed so as to penetrate the central portion of the attachment portion 164 in the vertical direction. The wiring drawing hole 164c is formed to communicate with the space inside the accommodating portion 161. A cylindrical member through which the wiring lines are inserted in the accommodating portion 161 is connected to the wiring drawing hole 164c.

The attachment portion 164 is attached to the left front pillar 12 with fasteners such as bolts. As shown in Fig. 13, a pair of fixing portions 12a is provided on the front pillar 12 in the vertical direction. Engagement holes 12b to be engaged with the fasteners are formed in the fixing portions 12a. A communicating hole 12c that communicates with the space in the front pillar 12 is provided between the upper and lower fixing portions 12a. A grommet for protecting the wiring lines is provided as appropriate in the communicating hole 12c.

As shown in Figs. 13 and 14, the fasteners inserted into the first fixing hole 164a and the second fixing hole 164b of the attachment portion 164 are engaged with the engagement holes 12b of the front pillar 12, so that the left radar unit 100L can be attached to the front pillar 12. As the second fixing hole 164b is formed to have a long hole shape in the present embodiment, the position of rotation of the left radar unit 100L with respect to the front pillar 12 (the position of rotation with the first fixing hole 164a as the center of rotation) can be adjusted within the region of the second fixing hole 164b. Accordingly, the position of the left radar unit 100L can be adjusted so that the non-opening wall 161e extends in a substantially vertical direction, and the upper wall 161a and the lower wall 161b extend in a substantially horizontal direction.

Further, in a state where the left radar unit 100L is attached to the front pillar 12, the wiring lines drawn out from the wiring drawing hole 164c of the attachment portion 164 can be inserted into the space in the front pillar 12 through the communicating hole 12c. In the present embodiment, a cover portion 165 that covers the space between the upper and lower fixing portions 12a from the left side is provided for the fixing portions 12a. The cover portion 165 is formed in a substantially plate-like shape, with the plate surface facing substantially the lateral direction. As the cover portion 165 is provided, the wiring lines drawn out from the left radar unit 100L can be made inconspicuous, and the appearance can be improved.

As shown in Fig. 14, in the left radar unit 100L as described above, the radar main body 110 and the attenuator 120 are accommodated in the space formed by the radar cover 130 and the attachment stay 160. In the left radar unit 100L, the emission surface 111 of the radar main body 110 and the covering portion 131 of the radar cover 130 are disposed substantially in parallel with each other. With this arrangement, the accuracy of detection by the radar main body 110 can be increased.

The configuration and the attachment mode of the left radar unit 100L have been described. The right radar unit 100R is formed symmetrically to the left radar unit 100L, and is attached to the right front pillar 12 in substantially the same manner as the left radar unit 100L. The angle of the emission surface 111 of the right radar unit 100R is set to substantially the same angle as that in the left radar unit 100L. That is, the right radar unit 100R is provided so that the elevation angle is about 10° with respect to level ground.

As the respective radio wave emission surfaces 111 of the left radar unit 100L and the right radar unit 100R are made to face obliquely upward as described above, it is possible to prevent erroneous detection of a structure provided on one side of the tractor 1. Examples of the structure include an oil feed port for fuel and the front wheels 6. The angles of the left radar unit 100L and the right radar unit 100R can be set as appropriate so that the structure is out of the left detection range X3L and the right detection range X3R.

Further, in the present embodiment, the attachment portions 164 of the left radar unit 100L and the right radar unit 100R are provided so that each non-opening wall 161e extends in a substantially vertical direction, and each upper wall 161a and each lower wall 161b extend in a substantially horizontal direction. With this arrangement, it is possible to avoid giving the user an impression that the left radar unit 100L and the right radar unit 100R are attached in an inclined manner, while directing each emission surface 111 to face obliquely upward.

The tractor 1 according to the present embodiment has been described so far. According to the present embodiment, a wide area around the tractor 1 can be detected with each radar unit 100 Also, results of detection performed by the respective radar units 100 can be utilized in controlling driving of the vehicle and the like.

Fig. 15 shows the detection ranges (the front detection range X1, the back detection range X2, the left detection range X3L, and the right detection range X3R) of the respective radar units 100. As shown in Fig. 15, the detection ranges of adjacent radar units 100 among the respective radar units 100 are designed to overlap each other. Thus, the surroundings of the tractor 1 can be suitably detected.

Note that, in the example shown in Fig. 15, blind spots for the detection ranges are formed near the hood 4 and the cabin 10. In the present embodiment, it is possible to detect a person or the like by capturing an image of the blind spots in the detection ranges, using a plurality of cameras (the front camera 51, the side cameras 52, and the back cameras 53) provided in the cabin 10. Thus, it is possible to control driving of the vehicle, using both the results of detection performed by the respective radar unit 100s and the result of imaging performed by the plurality of cameras.

Also, in the present embodiment, the radar main body 110, the attenuator 120, the radar cover 130, and the sealing member 140 are common members among the respective radar units 100. Thus, the radar units 100 can use each other's members mentioned above, and cost reduction can be achieved.

As described above, the tractor 1 (working vehicle) according to the present embodiment is
a working vehicle including
the radar unit 100 (detection unit) capable of detecting a detection target around the vehicle body.

The radar unit 100 includes:
the radar main body 110 (radar) that emits radio waves to be used for detection;
the attachment stay 150 (160) to which the radar main body 110 is fixed, and which is attached to the vehicle body; and
the radar cover 130 that is fixed to the attachment stay 150 (160), covers the emission surface 111 of the radar main body 110 that emits the radio waves, and is formed to be capable of transmitting the radio waves.

With this configuration, detection of a detection target can be suitably performed using radio waves. Specifically, the emission surface 111 of the radar main body 110 provided in the vehicle body is covered with the radar cover 130, so that adhesion of foreign matter such as mud to the emission surface 111 can be prevented, and accuracy of detection using radio waves can be increased.

Further, as the radar main body 110, the radar cover 130, and the attachment stay 150 (160) are integrated into the radar unit 100, attachment properties with respect to the vehicle body can be improved.

The tractor 1 also includes
the sealing member 140 that closes a gap between the radar cover 130 and the attachment stay 150 (160).

With such a configuration, the sealing member 140 is provided, and thus, it is possible to prevent dust and water from entering a gap between the radar cover 130 and the attachment stay 150 (160).

Further, in the radar cover 130,
the thickness of the portion (covering portion 131) through which the radio waves pass is uniform.

With such a configuration, the accuracy of detection using radio waves can be further increased.

The tractor 1 also includes
the attenuator 120 capable of attenuating a sidelobe wave generated on the outer side of a detection range, of the radio waves emitted by the radar.

With such a configuration, the accuracy of detection using radio waves can be further increased. Specifically, as the attenuator 120 capable of attenuating sidelobe waves is provided, it is possible to prevent erroneous detection of the structure of the tractor 1, an attached working machine, the ground, or the like, due to a sidelobe wave.

Further, the attenuator 120 includes:
the main body portion 121 having a detection range surface (inner surface) that is a surface along the detection range of the radar main body 110; and
the radio wave absorbers 122 provided on the detection range surface.

With such a configuration, it is possible to prevent detection of a structure or the like outside the detection range, and further increase accuracy of detection.

The tractor 1 also includes the rivets 123 (insertion portions) that are inserted into the holes 121a and 122a formed in the main body portion 121 and the radio wave absorbers 122.

With such a configuration, it is possible to position the radio wave absorbers 122 (RAM) with respect to the main body portion 121 (resin guide), using the rivets 123.

The radar unit 100 also includes:
the front radar unit 100F (front detection unit) provided on the front side of the vehicle body; and
the back radar unit 100B (back detection unit) provided on the back side of the vehicle body.

In the front radar unit 100F and the back radar unit 100B, at least the radar main bodies 110 or the radar covers 130 are formed to have the same configuration as each other.

With such a configuration, the front and back radar units 100 can use each other's radar main body 110 and radar cover 130, and cost reduction can be achieved.

The radar unit 100 also includes:
the left radar unit 100L (left detection unit) provided on the left side of the vehicle body; and
the right radar unit 100R (right detection unit) provided on the right side of the vehicle body.

In the left radar unit 100L and the right radar unit 100R, at least the radar main bodies 110 or the radar covers 130 are formed to have the same configuration as each other.

With such a configuration, the left and right radar units 100 can use each other's radar main body 110 and radar cover 130, and cost reduction can be achieved.

Also, as described above, the tractor 1 (working vehicle) according to the present embodiment is
the tractor 1 including the radar unit 100 (detection device) capable of detecting a detection target around the vehicle body by emitting radio waves.

The radar unit 100 includes:
the front radar unit 100F (front detection device) capable of detecting the detection target in front of the vehicle body;
the left radar unit 100L and the right radar unit 100R (side detection devices) capable of detecting the detection target on a side of the vehicle body; and
the back radar unit 100B (back detection device) capable of detecting the detection target behind the vehicle body.

With such a configuration, it is possible to detect a wide area around the vehicle. Also, results of detection performed by the respective radar units 100 can be utilized in controlling driving of the vehicle and the like.

Further, the front radar unit 100F
is disposed in front of the hood 4 of the vehicle body.

With such a configuration, the front radar unit 100F is disposed in front of the hood 4, and thus, a detection target in front of the vehicle body can be suitably detected.

The tractor 1 also includes
the front support member 200 (front support member) that is fixed to the vehicle body below the hood 4 and supports the front radar unit 100F.

With such a configuration, the front radar unit 100F can be suitably supported in front of the hood 4. Specifically, the front support member 200 supports the front radar unit 100F from the lower side of the hood 4, and thus, the front radar unit 100F can be prevented from blocking the view of the driver in the cabin 10.

The tractor 1 also includes
the design cover 300 (front support member cover) that covers the front side of the front support member 200.

With such a configuration, the design cover 300 is provided, and thus, the appearance can be improved.

Further, the front support member 200 and the design cover 300
are formed in shapes that do not overlap the working lamps 4b and the headlights 4c (illumination units) provided on the front surface of the hood 4 in a front view.

With such a configuration, the front support member 200 and the design cover 300 can be provided, without blocking the light from the working lamps 4b and the headlights 4c of the hood 4.

Further, the design cover 300 includes
the third covers 330 (guide portions) that can serve as a guide in driving the tractor 1 when viewed by the driver in the cabin 10.

With such a configuration, the tractor 1 can be easily driven.

Further, the third covers 330
are formed to have shapes extending from the central portion of the design cover 300 in the lateral direction, toward both sides in the lateral direction.

With such a configuration, the third covers 330 can be used as a guide indicating a ridge width or the like.

Further, the left radar unit 100L and the right radar unit 100R each include:
the radar main body 110 (radar) that emits the radio waves; and
the attachment stay 160 to which the radar main body 110 is fixed, and which is attached to the vehicle body.

The attachment stay 160 includes
the accommodating portion 161 that has at least one of a vertical surface (a surface of the non-opening wall 161e) extending in a vertical direction and a horizontal surface (a surface of the upper wall 161a and the lower wall 161b) extending in a horizontal direction, and accommodates the radar main body 110 so that the emission surface 111 of the radar main body 110 that emits the radio waves faces obliquely upward.

With such a configuration, the direction of emission of the radio waves by the radar main body 110 is directed obliquely upward, and thus, it is possible to prevent erroneous detection of a structure on a side of the vehicle.

Also, as at least one of the vertical surface and the horizontal surface is provided in the accommodating portion 161 of the attachment stay 160, it is possible to avoid giving the user an impression that the left radar unit 100L and the right radar unit 100R are attached in an inclined manner, though the accommodated radar main body 110 faces obliquely upward.

Further, the recess 11a that is recessed frontward so as to accommodate the back radar unit 100B therein is formed in a rear portion of the roof 11 of the cabin 10 of the vehicle body.

The back radar unit 100B accommodated in the recess 11a includes the back support member 400 (back support member) that supports the back radar unit 100B so as to be located at a position lower than the height of the roof 11.

With such a configuration, the back radar unit 100B is located at the height of the roof 11, and thus, it is possible to prevent erroneous detection of a working device provided on a rear portion of the vehicle body. Also, as the back radar unit 100B accommodated in the recess 11a is supported so as to be located at a position lower than the height of the roof 11, the back radar unit 100B can be prevented from coming into contact with the ceiling of a container or the like when the tractor 1 is put into the container that is used for transportation of the tractor 1, for example.

Note that the radar unit 100 according to the present embodiment is an embodiment of the detection unit according to the present invention.

Also, the front radar unit 100F, the back radar unit 100B, the left radar unit 100L, and the right radar unit 100R according to the present embodiment are an embodiment of the front detection unit, the back detection unit, the left detection unit, and the right detection unit according to the present invention.

Further, the radar main body 110 according to the present embodiment is an embodiment of the radar according to the present invention.

Also, the radar unit 100 according to the present embodiment is an embodiment of the detection device according to the present invention.

Further, the front radar unit 100F, the back radar unit 100B, the left radar unit 100L, and the right radar unit 100R according to the present embodiment are an embodiment of the front detection device, the back detection device, and the side detection devices according to the present invention.

Also, the front support member 200 according to the present embodiment is an embodiment of the front support member according to the present invention.

Further, the design cover 300 according to the present embodiment is an embodiment of the front support member cover according to the present invention.

Also, the working lamps 4b and the headlights 4c according to the present embodiment are an embodiment of the illumination units according to the present invention.

Further, the back support member 400 according to the present embodiment is an embodiment of the back support member according to the present invention.

Although one embodiment of the present invention has been described above, the present invention is not limited to the above configuration, and various modifications can be made within the scope of the invention disclosed in the claims.

For example, in the above embodiment, the configuration in which each radar unit 100 is disposed so as to face obliquely upward has been described as an example (see Figs. 1 and 3), but the present invention is not limited to this. For example, part or a front portion of each radar unit 100 may be disposed so as to face in a substantially horizontal direction, or may be disposed so as to face obliquely downward. The angle of each radar unit 100 can be set as appropriate, depending on the detection mode.

Also, in the above embodiment, the front radar unit 100F and the back radar unit 100B have the same configurations as each other, but the present invention is not limited to this. For example, the front radar unit 100F and the back radar unit 100B may have different configurations from each other.

Also, in the above embodiment, an example in which the attenuator 120 is attached to the attachment stay 150 (160) has been described, but the present invention is not limited to this. For example, the attenuator 120 may be attached to the radar cover 130.

Also, in the above embodiment, an example in which the main body portion 121 (see Fig. 6) of the attenuator 120 is formed with resin has been described, but the main body portion 121 may be formed with metal or the like.

Further, in the above embodiment, an example in which the radio wave absorbers 122 are provided on all of the four sidewalls constituting the main body portion 121 of the attenuator 120 has been described, but the present invention is not limited to this. For example, the radio wave absorbers 122 may be provided on any (one, for example) sidewall among the four sidewalls of the main body portion 121. In this case, the radio wave absorbers 122 may be provided only on the lower sidewall of the main body portion 121, for example.

Further, in the above embodiment, an example in which the rivets 123 are inserted into the holes 121a of the main body portion 121 of the attenuator 120 and the holes 122a of the radio wave absorbers 122 has been described, but the present invention is not limited to this. For example, the radio wave absorbers 122 may be attached to the main body portion 121 only by adhesion using a double-sided tape, an adhesive, or the like, without the holes 121a, the holes 122a, and the rivets 123.

Further, in the above embodiment, an example in which the sheet-like radio wave absorbers 122 are provided on the inner surfaces of the main body portion 121 to form the attenuator 120 has been described, but the present invention is not limited to this. For example, the main body portion 121 may be formed with a material capable of absorbing radio waves, without the sheet-like radio wave absorbers 122.

Also, in the above embodiment, an example in which the emission surface 111 of the radar main body 110 of each of the left radar unit 100L and the right radar unit 100R is disposed substantially parallel to the covering portion 131 of the radar cover 130 has been described (see Fig. 14), but the present invention is not limited to this. For example, while the emission surface 111 of each radar main body 110 is disposed obliquely upward, the radar cover 130 may be disposed so as to face the horizontal direction. In a case where the above configuration is adopted, it is possible to provide a sense of unity between the attachment stay 160 having surfaces extending in the horizontal direction and the vertical direction, and the radar cover 130.

Further, in the above embodiment, a detection device using radio waves is adopted as each radar main body 110, but the present invention is not limited to this. For example, a detection device formed with a noncontact sensor that uses ultrasonic waves or the like other than radio waves may be adopted.

In addition to the above, the shape, structure, and the like of each of the components described in the above embodiment are merely examples, and the configuration of each component can be changed as appropriate.

Also, in the above embodiment, the tractor 1 has been described as an example of a working vehicle, but working vehicles are not limited to such a mode. For example, a working vehicle may be some other agricultural vehicle, a construction vehicle, an industrial vehicle, or the like.

### INDUSTRIAL APPLICABILITY

The present invention is applicable to working vehicles.

### REFERENCE SIGNS LIST

1: Tractor
100: Radar unit
200: Front support member
300: Design cover
400: Back support member

## Claims

1. A working vehicle comprising a detection unit capable of detecting a detection target around a vehicle body, wherein
the detection unit includes:
a radar that emits a radio wave to be used for detection;
an attachment stay to which the radar is fixed, and which is attached to the vehicle body; and
a radar cover that is fixed to the attachment stay, covers an emission surface of the radar, and is capable of transmitting the radio wave, the emission surface emitting the radio wave.

2. The working vehicle according to claim 1, further comprising
a sealing member that closes a gap between the radar cover and the attachment stay.

3. The working vehicle according to claim 1, wherein,
in the radar cover, a portion through which the radio wave passes has a uniform thickness.

4. The working vehicle according to any one of claims 1 to 3, further comprising
an attenuator capable of attenuating a sidelobe wave generated outside a detection range, the sidelobe wave being of the radio wave emitted by the radar.

5. The working vehicle according to claim 4, wherein
the attenuator includes:
a main body portion having a detection range surface that is a surface extending along the detection range of the radar; and
a radio wave absorber provided on the detection range surface.

6. The working vehicle according to claim 5, further comprising
an insertion portion that is inserted into holes formed in the main body portion and the radio wave absorber.

7. The working vehicle according to claim 1, wherein
the detection unit includes:
a front detection unit provided on a front side of the vehicle body; and
a back detection unit provided on a back side of the vehicle body, and,
in the front detection unit and the back detection unit, at least one of the radar or the radar cover has the same configuration.

8. The working vehicle according to claim 1, wherein
the detection unit includes:
a left detection unit provided on a left side of the vehicle body; and
a right detection unit provided on a right side of the vehicle body, and,
in the left detection unit and the right detection unit, at least one of the radar or the radar cover has the same configuration.
